Europäisches Patentamt

European Patent Office

Office européen des brevets

(11) Veröffentlichungsnummer: **0 381 808**
**A2**

(12) **EUROPÄISCHE PATENTANMELDUNG**

(21) Anmeldenummer: **89113934.7**

(22) Anmeldetag: **28.07.89**

(51) Int. Cl.⁵: **B60J 7/10**

(30) Priorität: **09.02.89 DE 3903748**

(43) Veröffentlichungstag der Anmeldung:
**16.08.90 Patentblatt 90/33**

(84) Benannte Vertragsstaaten:
**AT BE CH DE ES FR GB GR IT LI LU NL SE**

(71) Anmelder: **Miederhoff, Volker**
**Röhre 50**
**D-5768 Sundern 7(DE)**

(72) Erfinder: **Miederhoff, Volker**
**Röhre 50**
**D-5768 Sundern 7(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Vorrichtung zum Befestigen von Planen insbesondere an Fahrzeugaufbauten.**

(57) Mit einer Vorrichtung zum Befestigen von Planen insbesondere an Fahrzeugaufbauten, an Traggestellen von Zelthallen od. dgl., wobei Plankrampen vorgesehen sind, die in der Befestigungslage von Ösen in den Planen übergriffen werden, soll eine Lösung geschaffen werden, mit der die Montage derartiger Plankrampen vereinfacht wird und mit der insbesondere ein Auswechseln beschädigter Krampen an jeder beliebigen Stelle möglich gemacht wird.

Dies wird dadurch erreicht, daß zur Befestigung der Krampen (10) eine querschnittlich im wesentlichen C-förmige Profilleiste (2,5) vorgesehen ist mit je einem freien eine Einstecknut (8) bildenden Steg (7) an jedem C-Schenkel (6) und daß jeder Krampen (10) an je einer Montageplatte (9) vorgesehen ist, die in die Nuten (8) am C-Profil einschiebbar ist.

Fig. 1

## Vorrichtung zum Befestigen von Planen insbesondere an Fahrzeugaufbauten

Die Erfindung richtet sich auf eine Vorrichtung zum Befestigen von Planen insbesondere an Fahrzeugaufbauten, an Traggestellen von Zelthallen od. dgl., wobei Plankrampen vorgesehen sind, die in der Befestigungslage von Ösen in den Planen übergriffen werden.

Es ist z.B. bekannt, Laderäume von Lkw's oder Anhängern oder Sattelaufliegern od. dgl. mit Planen abzudecken und diese Planen mittels Plankrampen zu befestigen, wobei Ösen in den Planen über die Krampen geschoben und ein Verschlußmittel dann durch die freien Ösenbögen schiebbar sind, etwa Kettenseilzüge od. dgl., insbesondere zur Erzeugung von sogenannten Zollverschlüssen, die ein Öffnen der Planen verhindern sollen. Dabei ist es bekannt, die Bordwand derartiger Fahrzeuge mit Krampen zu bestücken, durch Einnieten in die Leichtmetall- oder Holzprofile, die die Abschlußkante einer Bordwand bilden, insbesondere auch an der Ladebordwand an der rückwärtigen Stirnseite derartiger Fahrzeuge. Um die Plankrampen an der richtigen Stelle der Bordwand zu fixieren wird die vorgesehene Plane mit ihren Ösen herabgelassen und an den Ösenstellen werden dann an der Bordwand entsprechende Markierungen vorgenommen, um die Plankrampen dann richtig nachträglich fixieren zu können.

Autoplankrampen bzw. Befestigungsmittel für Planen an Anhängern od. dgl. sind in unterschiedlichen Ausführungen bekannt, so beispielsweise aus der DE-AS 1 081 748, der DE 79 31 563 U1, der DE 78 02 112 U1, aus GB 2 104 833 A oder US 4 730 866, wobei die letztere ein Profil mit daran fest anschraubbaren Befestigungsklips zeigt, die allerdings nicht nachträglich eingebaut werden können und auch nicht beliebig in ihrer Position veränderbar sind.

Aufgabe der Erfindung ist die Schaffung einer Lösung, mit der die Montage derartiger Plankrampen vereinfacht wird und mit der insbesondere ein Auswechseln beschädigter Krampen an jeder beliebigen Stelle möglich gemacht wird.

Mit einer Vorrichtung der eingangs bezeichneten Art wird diese Aufgabe gemäß der Erfindung dadurch gelöst, daß zur Befestigung der Krampen eine querschnittlich im wesentlichen C-förmige Profilleiste vorgesehen ist mit je einem freien eine Einstecknut bildenden Steg an jedem C-Schenkel und daß jeder Krampen an je einer Montageplatte vorgesehen ist, die in die Nuten am C-Profil einschiebbar ist.

Mit der Erfindung wird erreicht, daß die Plankrampen in der Montageschiene in jeder beliebigen Position fest angeordnet werden können, bevor sie fest mit der Profilschiene verbunden werden, d.h.

die Montage wird damit erheblich vereinfacht. Innerhalb der Profilleiste können die Montageplatten der Krampen beliebig verschoben werden, in der jeweils gewünschten Position können sie wenn gewünscht auch dauerhaft vernietet oder verschraubt werden.

In Ausgestaltung sieht die Erfindung vor, daß die Stärke der Montageplatte der Krampen geringer ist als die lichte weite der Nuten, wobei die Montageplatte mit randseitigen Klemmwülsten bzw. -sicken und mit abgerundeten Ecken ausgerüstet ist. Diese Gestaltung macht es möglich, an jeder beliebigen Stelle einen Krampen in die Profilleiste einzusetzen, ohne daß ein seitliches Einschieben notwendig wäre, was insbesondere für die Nachrüstung oder die Reparatur von besonderem Vorteil ist. Dabei wird die Montageplatte zunächst in Längsrichtung in das offene C-Profil eingelegt und um 90° derart verschwenkt, daß die Montageplatte in die Nuten einschwenkt, wobei die Klemmwülste bzw. -sicken dann die Montageplatte dort fixieren.

Vorteilhaft kann es sein, wenn die rückwärtige Seite des C-Profiles mit einer Nut zur Aufnahme von Nietköpfen oder dgl. zur Befestigung der Montageplatte ausgerüstet ist, derart, daß die Nietköpfe in der Nut verschwinden und damit z.B. gegen Abscherungen geschützt sind. Umgekehrt ist das Ladegut im Inneren eines so ausgerüsteten Fahrzeuges vor Beschädigungen durch die Nietköpfe od. dgl. geschützt.

Das Montageprofil kann einstückig mit einem Plankenprofil eines Fahrzeugaufbaus z.B. als Leichtmetallprofil ausgebildet sein, wie dies die Erfindung in weiterer Ausgestaltung ebenfalls vorsieht.

Um Zollverschlüsse zu gewährleisten, genügt es in der Regel bei dem klemmenden Positionieren der Montageplatte, diese mit einem Niet am C-Profil zu befestigen. Wird diese Befestigung zerstört oder muß die Position geändert werden, kann die Montageplatte in die neue Position verbracht werden und eine neue Niet eingezogen werden. Um dies in unterschiedlichen Stellungen und in unterschiedlichen Positionen zu ermöglichen, kann vorgesehen sein, die Tragplatte mit einer Mehrzahl von eine Vernietung oder sonstigen Befestigungen ermöglichenden Bohrungen auszurüsten.

Die Erfindung sieht auch vor, daß Einstecknuten an beiden Seiten des Montageprofiles vorgesehen sind. Mit dieser Lösung kann erreicht werden, daß beispielsweise in einem Lkw auch innen Befestigungskrampen zur Befestigung von Ladegut vorgesehen werden können, die vom Benutzer des Ladeinnenraumes je nach Bedarf an jeder Stelle eingeklipst werden können. Dabei ist die Erfindung nicht darauf beschränkt, daß die Innennut auf ihrer Außenseite zusätzlich eine Außennut aufweist, diese kann auch in Umkehrung ausschließlich innen bzw., wie weiter oben beschrieben, ausschließlich außen vorgesehen sein. Das Doppelprofil eignet sich insbesondere auch für den Zelthallenbau, da beispielsweise dann in den Einstecknuten die Krampen für benachbarte Zeltplanbahnen eingeklipst werden können.

Die Erfindung ist nachstehend anhand der Zeichnung beispielsweise näher erläutert. Diese zeigt in

Fig. 1 einen Schnitt durch ein Profilband nach der Erfindung als Teil einer Bordwand und in

Fig. 2 eine Aufsicht auf eine Montageplatte mit Krampen.

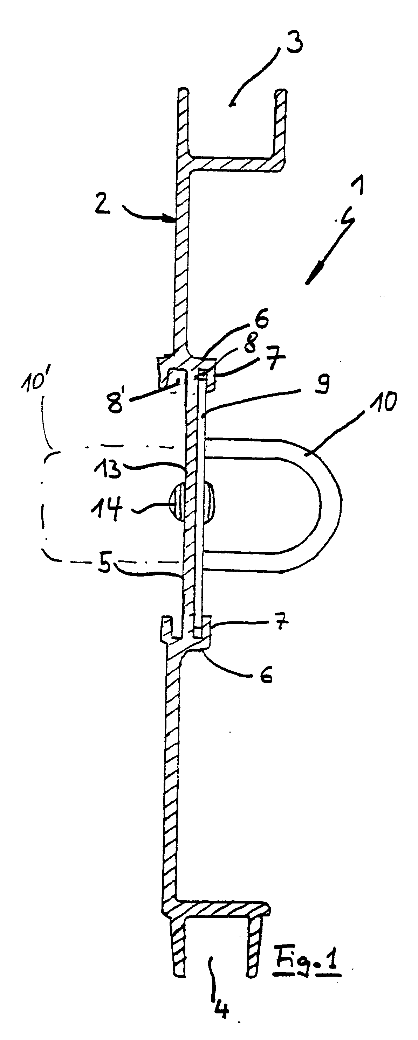

Die allgemein mit 1 bezeichnete Vorrichtung besteht in der Abbildung gemäß Fig. 1 aus einem eine Bordplanke bildenden Leichtmetallprofil 2 mit oberen Einsteck- 3 bzw. unteren Eingriffsprofilen 4 für benachbarte nicht näher dargestellte Bordwandplanken und einem mittleren Profilbereich 5, der querschnittlich im wesentlichen C-förmig gestaltet ist.

Der Profilbereich 5 weist an den freien Enden der mit 6 bezeichneten C-Schenkel je einen Steg 7 auf, derart, daß eine Einstecknut für eine Plankrampe 10 an einer Montageplatte 9 gebildet wird.

Jede Krampe 10 ist mit einer eigenen Montageplatte 9 ausgerüstet, die etwa rechteckförmig ausgestaltet ist und diago nal gegenüberliegend abgeschrägte Ecken 11 und im Bereich der Außenränder eingeprägte Sicken 12 aufweist.

Auf der der Krampe bzw. Öse 10 abgewandten Rückseite des Profilbereiches bzw. des Profiles 5 ist eine mit 13 bezeichnete Nut vorgesehen, die zur Aufnahme von mit 14 bezeichneten Nietköpfen dient, derart, daß diese Nietköpfe 14 geschützt sind bzw. das Ladegut nicht verletzen können.

Die Montageweise jeder Montageplatte 9 mit der Krampe 10 ist dabei die folgende:

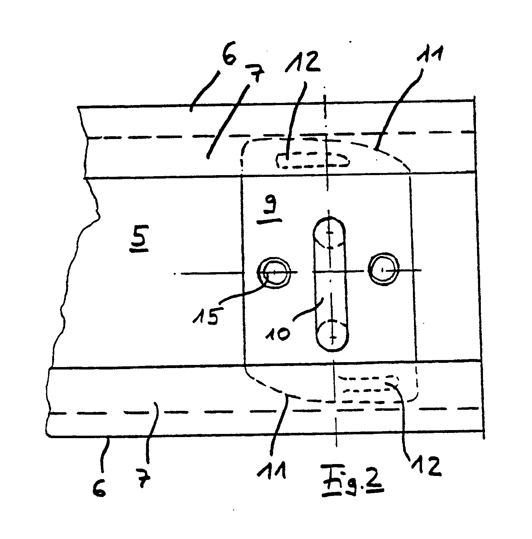

Die Montage der Krampen 10 mit der Montageplatte 9 wird zunächst in einer um 90° gegenüber der Position gemäß Fig. 2 verdrehten Position in das Innere des C-Profiles 5 eingelegt und dann um 90° derart verschwenkt, daß die Position gemäß Fig. 2 eingenommen wird. Dabei greifen Bereiche der Montageplatte 9, in Fig. 2 gestrichelt dargestellt, in die jeweiligen Nuten 8 ein. Aufgrund der Sicken 12 wird dann die Montageplatte in dieser Position fixiert bzw. verklemmt. Nunmehr kann wenigstens eines der in der Montageplatte vorgesehenen Löcher 15 durch das Profil 5 hindurchgebohrt werden. Die Niete 16 wird eingesetzt, derart, daß der Nietkopf 14 auf der Innenseite geschützt in der Nut 13 liegt und die Krampe kann so befestigt werden.

Neben den dargestellten Bohrungen 15 in der Montageplatte 9 können auch weitere Bohrungen werkseitig vorgesehen sein, wenn dies notwendig werden sollte. Zur Erzeugung eines Zollverschlusses reicht im Prinzip eine Befestigung am Profil 5 aus.

Wie dargestellt, kann das C-Profil einen integralen Bestandteil des Bordwandprofiles 2 darstellen, es kann aber auch als gesondertes Einzelbauteil zur Verfügung gestellt werden. Es wird dann insgesamt mit einer Bordwandplanke befestigt und kann dann in gleicher Weise genutzt werden.

**Ansprüche**

1. Vorrichtung zum Befestigen von Planen insbesondere an Fahrzeugaufbauten, an Traggestellen von Zelthallen od. dgl., wobei Plankrampen vorgesehen sind, die in der Befestigungslage von Ösen in den Planen übergriffen werden, dadurch gekennzeichnet, daß zur Befestigung der Krampen (10) eine querschnittlich im wesentlichen C-förmige Profilleiste (2,5) vorgesehen ist mit je einem freien eine Einstecknut (8) bildenden Steg (7) an jedem C-Schenkel (6) und daß jeder Krampen (10) an je einer Montageplatte (9) vorgesehen ist, die in die Nuten (8) am C-Profil einschiebbar ist.

2. Vorrichtung nach Anspruch 1, dadurch gekennzeichnet, daß die Stärke der Montageplatte (9) der Krampen (10) geringer ist als die lichte Weite der Nuten (8), wobei die Montageplatte (9) mit randseitigen Klemmwülsten bzw. -sicken (12) und mit abgerundeten Ecken (11) ausgerüstet ist.

3. Vorrichtung nach Anspruch 1 oder 2, dadurch gekennzeichnet, daß die rückwärtige Seite des C-Profiles (5) mit einer Nut zur Aufnahme von Nietköpfen (14) oder dgl. zur Befestigung der Montageplatten (9) ausgerüstet ist.

4. Vorrichtung nach einem der vorangehenden Ansprüche, dadurch gekennzeichnet, daß das Montageprofil (5) einstückig mit einem Plankenprofil (2) des Fahrzeugaufbaus als Leichtmetallprofil ausgebildet ist.

5. Vorrichtung nach einem der vorangehenden Ansprüche, dadurch gekennzeichnet, daß die Tragplatte (9) mit einer Mehrzahl von eine Vernietung oder sonstigen Befestigungen ermöglichenden Bohrungen (15) ausgerüstet ist.

6. Vorrichtung nach einem der vorangehenden Ansprüche, dadurch gekennzeichnet, daß die Einstecknuten (8 u. 8') an beiden Seiten des Montageprofiles (5) vorgesehen sind.

Fig. 1

Fig.2